# EUROPÄISCHE PATENTSCHRIFT

(11) **EP 1 979 399 B1**
(45) Veröffentlichungstag und Bekanntmachung des Hinweises auf die Patenterteilung: **23.10.2013**
(21) Anmeldenummer: 06830722.2
(22) Anmeldetag: 19.12.2006
(51) Int. Cl.: C08G 77/38, C09D 5/08, C08K 5/54, F24C 14/02

(54) **PYROLYSEFESTER BESCHICHTUNGSLACK**
PYROLYSIS RESISTANT COATING FINISH
LAQUE DE REVÊTEMENT RÉSISTANT À LA PYROLYSE

(30) Priorität: 17.01.2006 DE 102006002264
(43) Veröffentlichungstag der Anmeldung: 15.10.2008
(73) Patentinhaber: BSH Bosch und Siemens Hausgeräte GmbH, 81739 München (DE)
(72) Erfinder: GIER, Andreas, 66121 Saarbrücken (DE); KALLEDER, Axel, 66440 Blieskastel (DE); JÖRDENS, Frank, 83278 Traunstein (DE); SALOMON, Jürgen, 83308 Trostberg (DE); SCHMIDMAYER, Gerhard, 83093 Bad Endorf (DE)
(86) Internationale Anmeldenummer: PCT/EP2006/069941
(87) Internationale Veröffentlichungsnummer: WO 2007/082620

(56) Entgegenhaltungen:
- EP-A- 0 640 670
- DE-A1- 4 419 706
- DE-A1- 10 313 630
- DE-U1- 20 121 109

## Beschreibung

Die Erfindung betrifft ein Beschichtungssystem (eine Beschichtungslösung bzw. einen Beschichtungslack, alle drei Begriffe werden nachfolgend synonym verwendet) zum Schutz vor thermischen und chemischen Angriffen von metallischen Bauteilen. Weiterhin betrifft die vorliegende Erfindung ein Verfahren zur Herstellung dieser Beschichtungslösung, eine Beschichtung auf einem metallischen Substrat, die sich erhalten läßt aus der Beschichtungslösung, und ein Bauteil eines Gargerätes, das diese Beschichtung aufweist.

Bei der pyrolytischen Reinigung von Herden und ihren Zubehörteilen kommt es zu einer deutlichen thermischen (Temperaturen bis zu 480 und sogar 500°C) und chemischen (Lebensmittelreste) Belastung der aus metallischen Werkstoffen bestehenden Bauteile des Backofens bzw. des Zubehörs. Emailschichten können bei zu erwartenden Stoß-/Schlagbelastungen an den entsprechenden Bauteilen nicht eingesetzt werden, da das Email zum Abplatzen neigt. Versucht man, eine Glasschicht nasschemisch mittels eines nach dem Sol-Gel-Verfahren hergestellten Beschichtungslackes aufzubringen, so ist durch die geringe Schichtstärke zwar die Neigung zum Abplatzen minimiert, aber es kommt durch die Porosität der bisher bekannten Schichten zu einer Diffusion von Lebensmittel-Bestandteilen während der Pyrolyse. Dies führt zu einer deutlich sichtbaren Verfleckung der Beschichtung.

Die Hersteller von Haushaltsgeräten und insbesondere von Haushaltsgaröfen (Herden), speziell von solchen mit dem Leistungsmerkmal "pyrolytische Selbstreinigung", streben an, für Komponenten im Backofenbereich preiswerte Edelstahlsorten einzusetzen. Das Problem bei der Verwendung solcher Stähle liegt darin, dass diese bei Temperaturbelastung anlaufen und/oder stark korrodieren. Auch kommt es durch die in den Lebensmittelresten enthaltenen Salze (insbesondere Chloride) zu einer Lochfraßkorrosion des Stahls bei erhöhten Temperaturen.

Mit diesem Problem hat man sich in der Vergangenheit immer wieder beschäftigt, ohne dass es zu wirklich zufriedenstellenden Lösungen gekommen wäre. Man hat das Problem dadurch zu lösen versucht, dass man eine Edelstahl-Oberfläche mit einer transparenten Schutzschicht versieht, die ein Anlaufen der Edelstahl-Oberfläche bei Temperaturbelastung vermeidet. Zum anderen wäre es auch vorstellbar, dekorative Schichten für Edelstahl oder weniger edle Stähle einzusetzen, die den Stahl auch bei Temperaturbelastung vor Korrosion schützen und ihm eine dauerhaft dekorative Optik verleihen.

Im Einzelnen sind aus dem Stand der Technik zahlreiche Beschichtungssysteme/-lacke bekannt, mit denen Stahloberflächen dekoriert werden können. Dies sind die Folgenden.

Aus der DE-A 43 38 360 ist bekannt, dass glasartige Beschichtungen mit funktionellen Partikeln unter Verwendung organisch modifizierter Silane hergestellt werden können, indem die organische Beschichtung vollständig und defektfrei ausgebrannt wird. Dabei wird eine Zusammensetzung, die erhältlich ist durch Hydrolyse und Kondensation von mindestens einem hydrolysierbaren Silan SiX₄ (oder einem davon abgeleiteten Oligomer) und mindestens einem Organosilan mit wenigstens einem hydrolysierbaren und ggf. einem nicht hydrolysierbaren Rest (oder einem davon abgeleiteten Oligomer), mit mindestens einem Funktionsträger wie temperaturbeständiger/s Farbstoff/Pigment, Metall-/Nichtmetall-Oxid, färbendes Metallion, Metall- oder Metallverbindungs-Kolloid und Metallionen, die unter Reduktionsbedingungen zu Metall-Kolloiden reagieren, vermischt. Diese Beschichtungen werden in der DE-A 43 38 360 als mehrere µm dick (bis zu 3,5 um) beschrieben. Bei der praktischen Nacharbeitung der offenbarten Lehre zeigt sich jedoch, dass die Beschichtungen eine Dicke von nur etwa 1 µm haben. Deshalb ist es in der Praxis nicht möglich, in die Ausgangssole für diese Schichten Pigmente mit einer Komgröße von >1 pm einzuarbeiten. Zudem sind diese Beschichtungen zwar nach Temperatur-Auslagerung defektfrei, sie sind jedoch insbesondere im TemperaturBereich von 200 bis 300 °C infolge der Zersetzung organischer Reste porös. Eben in diesem Temperatur-Bereich läuft Edelstahl an und wäre infolge der Porosität der Beschichtung nicht ausreichend geschützt. Zudem gelingt es bei solchen Beschichtungen auch nicht, die organischen Reste zu 100 % zu zersetzen. Dies wiederum bedeutet, dass während der Gesamteinsatzdauer solcher Beschichtungen nicht sichergestellt werden kann, dass keine gesundheitsschädlichen Emissionen (mit Emissionen sind hier Crackprodukte aus den organischen Silanen aus dem Ausgangssol gemeint) auftreten.

Die DE-A 42 17 432 beschreibt, dass es möglich ist, Sole auf der Basis von Organosilanen unter Zusatz von nanoskaiigen SiCVPartskeln zur Herstellung von Beschichtungen mit einer Dicke von bis zu 10 µm zu verwenden. Diese Sole sind für ihre gute Benetzung und ihre ausgezeichnete Haftung bekannt und zeichnen sich durch ihre gute thermische Beständigkeit aus. Als eine Lösung für die gestellte Aufgabe eignen sich die beschriebenen Beschichtungen allerdings aus zwei Gründen nicht. Erstens lassen sich nach der Lehre der DE-A 42 17 432 nur Gläser beschichten. Zweitens erfährt der Fachmann beim Nacharbeiten der in der DE-A 42 17 432 niedergelegten Anweisungen, dass lediglich stark saure Beschichtungssole zugänglich sind (auch wenn die DE-A 42 17 432 für basische Sole entsprechendes behauptet), wie sich leicht aus den Ausführungsbeispielen ablesen läßt. Solche sauren Beschichtungssole sind aber für die Beschichtung von insbesondere unedlen Stählen ungeeignet, da es schon während des Beschichtungsvorgangs zu einer Korrosion der Stahloberfläche käme. Entsprechende Korrosionsbereiche wären Fehlstellen, die im Gebrauch unweigerlich zur Beschädigung bzw. Zerstörung der Beschichtung führen würden. Darüber hinaus ist aus unveröffentlichten Untersuchungen der Anmelderin bekannt, dass solche Beschichtungen infolge ihrer unzureichenden Stabilität und Abreinigbarkeit sowie infolge ihrer Verfleckungsneigung (Bildung der Verfleckungen durch pyrolysierte Lebensmittelreste) ungeeignet sind für den Einsatz in Gargeräten.

Die DE-As 197 14 949 und 100 59 487 beschreiben die Herstellung von Solen auf der Basis von Silikaten und ihre Applikation auf Metalloberflächen. Zusätzlich zu den Organosilanen weist das Beschichtungssystem entweder (i) nanoskalige SiO₂-Partikel oder (ii) ein Alkali-/Erdalkali-Oxid/-Hydroxid oder (iii) nanoskalige SiO₂-Partikel und ein Alkali-/Erdalkali-Oxid/- Hydroxid auf. Die Beschichtungen werden mit Dicken von bis zu 10 µm beschrieben, wobei die kritische Beschichtungsdicke jedoch unbefriedigend niedrig ist. Unter kritischer Beschichtungsdicke wird erfindungsgemäß diejenige Beschichtungsdicke verstanden, bis zu der nach Trocknung und Verdichtung des auf das Substrat (z.B. Glas, Metall) aufgebrachten Beschichtungssystems keine Risse und/oder Poren in der Beschichtung verbleiben, d.h., bis zu der die Poren während der Verdichtung dicht sintern, so dass dann insbesondere während der Pyrolyse die unerwünschte Diffusion von Lebensmittelresten ausbleibt.

Die EP0640670 A, DE4419706A1, DE10313630A1 und DE20121109U1 offenbaren Beschichtungslösungen auf Siloxanbasis.

Zusammenfassend lassen sich die Mängel des Stands der Technik im konkreten Anwendungsbereich der Gargeräte (Herde) wie folgt zusammenfassen: Alle bekannten Beschichtungssysteme/-lacke/-lösungen versagen, weil sie zu Beschichtungen führen, die
- eine mangelhafte thermische Beständigkeit aufweisen und/oder
- eine mangelhafte Korrosionsschutzwirkung beim Einsatz unedler Stähle haben und/oder
- unter Temperaturbelastung Emissionen (wie oben definiert) nicht verhindern bzw. sogar selbst verursachen und/oder
- keinen bzw. nur einen unzureichenden Anlaufschutz auf Edelstahl gewähren.

Dementsprechend haben es sich die Erfinder der vorliegenden Anmeldung zum Ziel gesetzt, transparente bzw. dekorative Beschichtungswerkstoffe zu entwickeln, die die Mängel der aus dem Stand der Technik bekannten Beschichtungssysteme/-lacke/-lösungen nicht oder zumindest nur in abgeschwächter Ausprägung aufweisen. Das Ziel bestand also in der Entwicklung einer Beschichtungslösung bzw. eines Beschichtungssystems/-lackes, die/das (i) infolge ihrer/seiner Schutzwirkung ein Anlaufen des Substrates (Edelstahl) bei Temperaturbelastung unterbinden kann, d.h. zu einer hinreichend permeationsdichten (hauptsächlich undurchlässig für O₂) Beschichtung führt, (ii) als fertige Beschichtung dekorativ wirkt, d.h. die Anlauffarbe von weniger edlen Stählen optisch abdeckt, (iii) auf mitunter komplex geformten Bauteilen hinreichend dick und insbesondere rissfrei aufgetragen und verdichtet werden kann, (iv) als fertige Beschichtung eine sehr gute chemische Beständigkeit aufweist und (v) ansonsten alle Anforderungen aus dem Bereich Gargeräte erfüllt (dazu gehören z.B. eine ausreichende mechanische Stabilität, um einen störungsfreien Betrieb zu gewährleisten, das Beschichtungssystem darf weiterhin keine physiologisch bedenklichen Schwermetalle bzw. deren Oxide enthalten und auch während des Betriebes bei erhöhten Temperaturen keine schädlichen Emissionen verursachen). Die Aufgabe der Erfinder bestand, vereinfacht ausgedrückt, also darin, auf thermisch belasteten Metall- und insbesondere (Edel-)Stahl-Substraten eine Beschichtung aufzubringen, die auch auf Dauer ästhetisch ansprechende Oberflächen gewährleistet.

Diese Aufgabe haben die Erfinder dadurch gelöst, dass sie eine Beschichtungslösung bereit gestellt haben, die eine Sol-Zusammensetzung ist. Die Beschichtungslösung basiert auf einem Gemisch aus mindestens *einem* Silan und mindestens *einem* Polysiloxan, das durch Hydrolyse und Kondensation auf einem Substrat zu einer Beschichtung auf dem Substrat ausgehärtet werden kann, wobei das mindestens eine Silan die allgemeine Formel RₓSi(OR')₄₋ₓ aufweist und das mindestens eine Polysiloxan die allgemeine Formel [R2SiO]_{y} bzw. R₃Si-(O-SiR2)_{y}-O-SiR3 aufweist, in denen
- die Reste R unabhängig voneinander Alkyl, Aryl, Arylalkyl Alkylaryl oder H sind;
- die Reste R' unabhängig voneinander H, Methyl, Ethyl, n- oder i-Propyl, n-, iso-, sek.- oder tert.-Butyl sind;
- x = 0 oder 1 (für das erste Silan);
- x = 0, 1, 2, 3 oder 4 (für jedes weitere Silan); und
- y = eine ganze Zahl, die mindestens 2 ist und nahezu unendlich groß
sein kann.

Die Beschichtungslösung ist weiterhin dadurch gekennzeichnet, dass sie zusätzlich wenigstens ein Alkali- oder Erdalkali-Oxid oder -Hydroxid aufweist, wobei die Beschichtungslösung ein Aluminium-Alkoxid aufweist, nanoskalige SiO₂-Partikel aber nicht notwendigerweise aufweisen muss, um die Aufgabe, die der vorliegenden Erfindung zu Grunde liegt, tatsächlich auch zu lösen. Es ist aber auch keineswegs von Nachteil, wenn die Beschichtungslösung solche nanoskaligen SiO₂-Partikel aufweist.

Als Alkali-/Erdalkali-Oxide/-Hydroxide sind Alkali-Oxide/-Hydroxide, insbesondere die AlkaliOxide (speziell K₂O), bevorzugt. Die Alkali-Hydroxide, und insbesondere KOH und NaOH, sind aber ebenso bevorzugt.

Die erfindungsgemäße Beschichtungslösung kann zusätzlich mindestens ein Lösungsmittel (LM) umfassen, dessen Siedepunkt höher als der von Ethanol ist (Sdp. von Ethanol 78,32°C). Beispiele für solche LM sind allgemein längerkettige Alkohole, beispielsweise 2-Butanol. Prinzipiell sind alle Lösungsmittel geeignet, die mit dem Beschichtungssol (Beschichtungslack) kompatibel sind und die während des Trocknungsschritts nach dem Auftrag des Beschichtungslacks bei etwa 120°C entfernt werden können.

Das mindestens *eine* Polysiloxan wird auch als silikatische Verdünner-Komponente oder silikatischer Reaktiv-Verdünner bezeichnet. Dieser silikatische Reaktiv-Verdünner trägt zu einer deutlich verbesserten Verdichtung und einer erhöhten Hydrophobie der Beschichtung bei. Es wird also eine Diffusionssperrschicht gebildet, die eine Verfleckung im Pyrolysebetrieb wirkungsvoll verhindert.

Das Verhältnis zwischen den silikatischen Komponenten (Silan und Polysiloxan) und Alkali-/Erdalkali-Oxid/-Hydroxid beträgt, bezogen auf das Atomverhältnis Si:Alkalimetall, 20:1 bis 5:1, insbesondere 15:1 bis 10:1. Weitere Angaben (siehe nachfolgende bevorzugte Ausführungsformen) zum Verhältnis zwischen den silikatischen Komponenten und dem Alkali-/ Erdalkali-Oxid/-Hydroxid beziehen sich ebenfalls auf das Atomverhältnis Si:Alkalimetall

Bevorzugterweise ist x für das erste Silan definiert als 1. Gemäß einer anderen bevorzugten Ausführungsform ist R' entweder Methyl oder Ethyl. Gemäß einer weiteren bevorzugten Ausführungsform ist R' Methyl oder Ethyl und x = 1. Gemäß einer noch bevorzugteren Ausführungsform ist R' Methyl (oder Ethyl), das Alkali-/Erdalkali-Oxid/- Hydroxid ist KOH und x = 1.

Insbesondere bevorzugt sind Beschichtungslösungen/-systeme/-lacke, für die die folgenden Randbedingungen gelten (die Verhältnisse beziehen sich jeweils auf die jeweiligen Atomgewichte):
(a) x = 1, R = H, alle R' = Methyl, die Alkali-/Erdalkali-Komponente ist KOH und das Verhältnis Si: K = 15:1 bis 10:1
(b) x = 1, R = Methyl, alle R' = Methyl, die Alkali-/Erdalkali-Komponente ist KOH und das Verhältnis Si: K = 15:1 bis 10:1
(c) x = 1, R = Ethyl, alle R' = Methyl, die Alkali-/Erdalkali-Komponente ist KOH und das Verhältnis Si: K = 15:1 bis 10:1
(d) x = 1, R = Methyl, alle R' = Ethyl, die Alkali-/Erdalkali-Komponente ist KOH und das Verhältnis Si: K = 15:1 bis 10:1
(e) x = 1, R = H, alle R' = Ethyl, die Alkali-/Erdalkali-Komponente ist KOH und das Verhältnis Si: K = 15:1 bis 10:1
(f) x = 1, R = Ethyl, alle R' = Ethyl, die Alkali-/Erdalkali-Komponente ist KOH und das Verhältnis Si: K = 15:1 bis 10:1
(g) x = 0, alle R' = Methyl, die Alkali-/Erdalkali-Komponente ist KOH und das Verhältnis Si: K = 15:1 bis 10:1
(h) x = 0, alle R' = Ethyl, die Alkali-/Erdalkali-Komponente ist KOH und das Verhältnis Si: K= 15:1 bis 10:1
(i) x = 0, alle R' = n-Propyl, die Alkali-/Erdalkali-Komponente ist KOH und das Verhältnis Si: K = 15:1 bis 10:1
(j) x = 0, alle R' = i-Propyl, die Alkali-/Erdalkali-Komponente ist KOH und das Verhältnis Si: K = 15:1 bis 10:1
(k) x = 0, alle R' = n-Butyl, die Alkali-/Erdalkali-Komponente ist KOH und das Verhältnis Si: K= 15:1 bis 10:1 15
(l) x = 0, alle R' = i-Butyl, die Alkali-/Erdalkali-Komponente ist KOH und das Verhältnis Si: K = 15:1 bis 10:1
(m) x = 1, R = H, alle R' = Methyl, die Alkali-/Erdalkali-Komponente ist NaOH und das Verhältnis Si: Na = 15:1 bis 10:1
(n) x = 1, R = Methyl, alle R' = Methyl, die Alkali-/Erdalkali-Komponente ist NaOH und das Verhältnis Si: Na = 15:1 bis 10:1
(o) x = 1, R = Ethyl, alle R' = Methyl, die Alkali-/Erdalkali-Komponente ist NaOH und das Verhältnis Si: Na = 15:1 bis 10:1
(p) x = 1, R = Methyl, alle R' = Ethyl, die Alkali-/Erdalkali-Komponente ist NaOH und das Verhältnis Si: Na = 15:1 bis 10:1
(q) x = 1, R = H, alle R' = Ethyl, die Alkali-/Erdalkali-Komponente ist NaOH und das Verhältnis Si: Na = 15:1 bis 10:1
(r) x = 1, R = Ethyl, alle R' = Ethyl, die Alkali-/Erdalkali-Komponente ist NaOH und das Verhältnis Si: Na = 15:1 bis 10:1
(s) x = 0, alle R' = Methyl, die Alkali-/Erdalkali-Komponente ist NaOH und das Verhältnis Si: Na = 15:1 bis 10:1
(t) x = 0, alle R' = Ethyl, die Alkali-/Erdalkali-Komponente ist NaOH und das Verhältnis Si: Na= 15:1 bis 10:1
(u) x = 0, alle R' = n-Propyl, die Alkali-/Erdalkali-Komponente ist NaOH und das Verhältnis Si:Na = 15:1 bis 10:1
(v) x = 0, alle R¹ = i-Propyl, die Alkali-/Erdalkali-Komponente ist NaOH und das Verhältnis Si: Na = 15:1 bis 10:1
(w) x = 0, alle R' = n-Butyl, die Alkali-/Erdalkali-Komponente ist NaOH und das Verhältnis Si: Na = 15:1 bis 10:1
(x) x = 0, alle R' = i-Butyl, die Alkali-/Erdaikali-Komponente ist NaOH und das Verhältnis Si: Na = 15:1 bis 10:1
(y) x = 1, R = H, zwei R' = Methyl, ein R' = Ethyl, die Alkali-/Erdalkali-Komponente ist NaOH und das Verhältnis Si: Na = 15:1 bis 10:1
(z) x = 1, R = Methyl, zwei R' = Methyl, ein R' = Ethyl, die A!kali-/Erdalkali-Kornponente ist NaOH und das Verhältnis Si: Na = 15:1 bis 10:1
(aa) x = 1, R = Ethyl, zwei R' = Methyl, ein R' = Ethyl, die Alkali-/Erdalkali-Komponente ist NaOH und das Verhältnis Si: Na = 15:1 bis 10:1
(bb) x = 1, R = Methyl, zwei R' = Methyl, ein R' = Ethyl, die Alkali-/Erdalkali-Komponente ist NaOH und das Verhältnis Si: Na = 15:1 bis 10:1
(cc) x = 1, R = H, zwei R' = Methyl, ein R' = Ethyl, die Alkali-/Erdalkali-Komponente ist NaOH und das Verhältnis Si: Na = 15:1 bis 10:1
(dd) x = 1, R = Ethyl, zwei R' = Methyl, ein R' = Ethyl, die Alkali-/Erdalkali-Komponente ist NaOH und das Verhältnis Si: Na = 15:1 bis 10:1
(ee) x = 0, je zwei R' = Methyl und Ethyl, die Alkali-/Erdalkali-Komponente ist NaOH und das Verhältnis Si: Na = 15:1 bis 10:1
(ff) x = 0, drei/ein R' = Methyl/Ethyl, die Alkali-/Erdalkali-Komponente ist NaOH und das Verhältnis Si: Na = 15:1 bis 10:1
(gg) x = 0, drei/ein R' = Ethyl/Methyl, die Alkali-/Erdalkali-Komponente ist NaOH und das Verhältnis Si: Na = 15:1 bis 10:1 25
(hh) x = 0, je zwei R' = Methyl und i-Propyl, die Alkali-/Erdalkali-Komponente ist NaOH und das Verhältnis Si: Na = 15:1 bis 10:1
(ii) x = 0, drei/ein R' = Methyl/i-Propyl, die Alkali-/Erdalkali-Komponente ist NaOH und das Verhältnis Si: Na = 15:1 bis 10:1
(jj) x = 0, drei/ein R' = i-Propyl/Methyl, die Alkali-/Erdalkali-Komponente ist NaOH und das 30 Verhältnis Si: Na = 15:1 bis 10:1
(kk) x = 1, R = H, zwei R' = Methyl, ein R' = Ethyl, die Alkali-/Erdalkali-Komponente ist KOH und das Verhältnis Si: Na = 15:1 bis 10:1
(ll) x = 1, R = Methyl, zwei R' = Methyl, ein R' = Ethyl, die Alkali-/Erdalkali-Komponente ist KOH und das Verhältnis Si: K = 15:1 bis 10:1
(mm) x = 1, R = Ethyl, zwei R' = Methyl, ein R' = Ethyl, die Alkali-/Erdalkali-Komponente ist KOH und das Verhältnis Si: K = 15:1 bis 10:1
(nn) x = 1, R = Methyl, zwei R' = Methyl, ein R' = Ethyl, die Alkali-/Erdalkali-Komponente ist KOH und das Verhältnis Si: K = 15:1 bis 10:1
(oo) x = 1, R = H, zwei R' = Methyl, ein R' = Ethyl, die Alkali-/Erdalkali-Komponente ist KOH und das Verhältnis Si: K = 15:1 bis 10:1
(pp) x = 1, R = Ethyl, zwei R' = Methyl, ein R' = Ethyl, die Alkali-/Erdalkali-Komponente ist KOH und das Verhältnis Si: K = 15:1 bis 10:1
(qq) x = 0, R = H, je zwei R' = Methyl und Ethyl, die Alkali-/Erdalkali-Komponente ist KOH und das Verhältnis Si: K = 15:1 bis 10:1
(rr) x = 0, drei/ein R' = Methyl/Ethyl, die Alkali-/Erdalkali-Komponente ist KOH und das Verhältnis Si: K = 15:1 bis 10:1
(ss) x = 0, drei/ein R' = Ethyl/Methyl, die Alkali-/Erdalkali-Komponente ist KOH und das Verhältnis Si: K = 15:1 bis 10:1 15
(tt) x = 0, je zwei R' = Methyl und i-Propyl, die Alkali-/Erdalkali-Komponente ist KOH und das Verhältnis Si: K = 15:1 bis 10:1
(uu) x = 0, drei/ein R' = i-Propyl/Methyl, die Alkali-/Erdalkali-Komponente ist KOH und das Verhältnis Si: K = 15:1 bis 10:1
(w) x = 0, ein/drei R' = i-Propyl/Methyl, die Alkali-/Erdalkali-Komponente ist KOH und das Verhältnis Si: K= 15:1 bis 10:1

Ganz besonders bevorzugt sind Beschichtungslösungen/-systeme/-lacke, für die die folgenden Randbedingungen gelten (die Verhältnisse beziehen sich jeweils auf die Atomgewichte):
(a) x = 1, R = Methyl, alle R' = Ethyl, die Alkali-/Erdalkali-Komponente ist KOH und das Verhältnis Si: K = 13:1 bis 10:1, insbesondere 12:1 bis 11:1
(b) x = 1, R = Ethyl, alle R' = Methyl, die Alkali-/Erdalkali-Komponente ist KOH und das Verhältnis Si: K = 13:1 bis 10:1, insbesondere 12:1 bis 11:1
(c) x = 1, R = Methyl, alle R' = Ethyl, die Alkali-/Erdalkali-Komponente ist NaOH und das Verhältnis Si: Na = 13:1 bis 10:1, insbesondere 12:1 bis 11:1
(d) x = 1, R = Ethyl, alle R' = Ethyl, die Alkali-/Erdalkali-Komponente ist NaOH und das Verhältnis Si: Na = 13:1 bis 10:1, insbesondere 12:1 bis 11:1

Während der Kondensation des mindestens *einen* Silans in dem oben genannten Gemisch, aus dem mindestens *einen* Silan, dem Alkali-/Erdalkali-Oxid/-Hydroxid und dem mindestens einen Polysiloxan (die Kondensation erfolgt durch Erhöhung der Temperatur) nach seinem Aufbringen auf das Substrat werden Alkohole bzw. Wasser gebildet, die zum großen Teil im Laufe der Trocknung bzw. Verdichtung der Beschichtungslösung und deren Umwandlung in die fertige Beschichtung wieder entfernt werden.

Die erfindungsgemäße Beschichtungslösung ist nach ihrer Applikation auf das Substrat, ihrer Trocknung (üblicherweise etwa 10 Min. bei etwa 120°C), Verdichtung (üblicherweise etwa 15 Min. bei etwa 500 °C) und ihrem Einbrand als Beschichtung auf dem Substrat einerseits temperaturbeständig bis 500 °C (in mehrfach wiederholten Tests wurde sogar ermittelt, dass das Material auch bei 600 °C Belastung beständig ist), andererseits aber auch unempfindlich gegen Verfleckungen durch Lebensmittel-Einbrand sowie kratz- und stoßfest. Darüber hinaus ist sie auch kostengünstig zu applizieren.

Ein wesentlicher Vorteil der Beschichtungslösung der vorliegenden Erfindung ist, dass sie nach ihrem Auftrag, ihrer Trocknung und Verdichtung sowie ihrem Einbrand und ihrer Umwandlung in eine Beschichtung auch bei Betriebstemperaturen von bis zu 450 oder 500 °C keine Crackprodukte (schädliche Emissionen) freisetzt und auch nicht zerstört wird.

Ein wesentlicher Vorteil der erfindungsgemäßen Beschichtungslösung liegt weiterhin darin, dass sie ohne nanoskalige SiO₂-Teilchen auskommt. Deren Funktion wird durch den Einsatz eines Polysiloxans nicht nur übernommen, sondern überraschenderweise sogar übertroffen, was sich in einem erhöhten Feststoffgehalt in der Beschichtung und somit in einer höheren kritischen Beschichtungsdicke äußert. Andererseits bewirkt der Einsatz des Polysiloxans aber auch eine bei hohen Temperaturen deutliche Absenkung der Oberflächenenergie der Beschichtung sowie eine verbesserte Hydrophobie der Beschichtung bzw. ihrer Oberfläche auch bei erhöhten Temperaturen, was bei einer Verwendung der Beschichtung auf (Edel-)Stahlteilen von Hausgeräten ebenfalls vorteilhaft ist. Ein weiterer Vorteil, der mit der Verwendung des Polysiloxans anstelle der (oder ggf. auch zusätzlich zu den) nanoskaligen SiO₂-Teilchen einhergeht, besteht in der Ausbildung einer verbesserten Permeationssperrwirkung der Beschichtung insbesondere im Temperaturbereich unterhalb 350 °C. Diese Verbesserung wiederum bewirkt einen verbesserten Anlaufschutz durch das Fernhalten von Sauerstoff von dem (Edel-)Stahl. Die Beschichtungslösung weist ein Aluminium-Alkoxid auf, um in der Beschichtung gezielt Nahordnungen mit Alkali-Aluminiumsilikat-Struktur (im Fall von Na als Alkalimetall-Komponente also eine Albit = Na[AlSi₃O₈]-Struktur, im Fall von K als Alkalimetall-Komponente eine Orthoklas bzw. Kalifeldspat = K[AlSi₃O₈]-Struktur) zu generieren. Weist die Beschichtung solche Albit-und/oder Orthoklas-Strukturen auf, so zeichnet sie sich durch ihre exzellente chemische Beständigkeit aus. Diese Variante bietet sich insbesondere dann an, wenn das zu beschichtende Substrat kein Aluminium aufweist. Weist das zu beschichtende Substrat Aluminium auf, kann dieses Aluminium in dem Substrat zur Ausbildung einer Alkali-Aluminiumsilikat-Struktur dienen und braucht auch fakultativ nicht dem Beschichtungssystem zugefügt werden.

Zusätzlich kann der optische Eindruck der Beschichtungen durch den Einbau von Farbkörpern (z.B. Pigmente wie Perlglanz-Pigmente) verändert werden. Für die Farbgebung werden übliche temperaturbeständige, anorganische, vorzugsweise ungiftige bzw. keine giftigen Emissionen verursachenden Pigmente verwendet, wie sie auch in Emaillefarben zum Einsatz kommen. Besonders bevorzugte Pigmente im Sinn der Erfindung sind Graphit, TiO₂ oder ein Gemisch dieser beiden. Dementsprechend enthält die Beschichtungslösung erfindungsgemäß bevorzugt ein temperaturbeständiges, anorganisches Pigment auf Basis von Glimmer, wobei das Pigment eine metallische Optik gewährleistet.

Besonders bevorzugt sind Ausführungsformen, bei denen die erfindungsgemäße Beschichtungslösung nanoskalige SiO₂-Teilchen und eine Aluminium-Verbindung, insbesondere ein Aluminium-Alkoxid, SiO₂-Teilchen und Aluminium-Verbindung, jeweils in der Art und Form, wie oben bereits näher ausgeführt, umfasst.

Besonders bevorzugt sind ebenfalls Ausführungsformen, bei denen die erfindungsgemäße Beschichtungslösung nanoskalige SiO₂-Teilchen und einen der oben genannten Farbkörper (z.B. ein Pigment), SiO₂-Teiichen und Farbkörper, jeweils in der Art und Form, wie oben bereits näher ausgeführt, aufweist.

Besonders bevorzugt sind weiterhin Ausführungsformen, bei denen die erfindungsgemäße Beschichtungslösung eine Aluminium-Verbindung, insbesondere ein Aluminium-Alkoxid, und einen der oben genannten Farbkörper (z.B. ein Pigment), Aluminium-Verbindung und Farbkörper, jeweils in der Art und Form, wie oben bereits näher ausgeführt, aufweist.

Schließlich sind aber auch Ausführungsformen bevorzugt, bei denen die erfindungsgemäße Beschichtungslösung nanoskalige SiO₂-Teilchen, eine Aluminium-Verbindung (ein Aluminium-Alkoxid) und Farbkörper (z.B. Pigmente, insbesondere Perlglanz-Pigmente), SiO₂-Teilchen, Aluminium-Verbindung und Farbkörper, jeweils in der Art und Form, wie oben bereits näher ausgeführt, enthält.

Im Nachfolgenden soll das Verfahren zur Herstellung der erfindungsgemäßen Beschichtungslösung im Sol-Zustand beschrieben werden. Dieses Verfahren umfasst die Schritte,
(a) mindestens ein Silan der allgemeinen Formel RₓSi(OR')₄₋ₓ allein oder mit mindestens einem Polysiloxan der allgemeinen Formel [R₂SiO]_{y} bzw. R₃Si-(O-SiR₂)_{y}-O-SiR₃, wobei R, R', x und y, wie oben bzw. in Anspruch 1 definiert sind, bereitzustellen und ggf. zu mischen (das heißt, Hydrolyse und Kondensation der silikatischen Komponenten können vollständig in Gegenwart des/der Polysiloxans/e ablaufen, das/die Polysiloxan/e kann/können aber auch erst nach Bildung/Herstellung der Beschichtungslösung im Sol-Zustand zugesetzt werden);
(b) dem Silan bzw. Gemisch in bzw. aus Schritt (a) ein Alkali-/Erdalkali-Oxid/- Hydroxid zuzusetzen (das heißt, Hydrolyse und Kondensation der silikatischen Komponenten erfolgt vollständig in Gegenwart des Alkali-/Erdalkali-Oxids/- Hydroxids);
(c) dem Gemisch in bzw. aus Schritt (b) ggf. einen Farbkörper zuzusetzen (das heißt, Hydrolyse und Kondensation können vollständig in Gegenwart des Farbkörpers ablaufen, der Farbkörper kann aber auch erst nach Bildung/Herstellung der Beschichtungslösung im Sol-Zustand zugesetzt werden, wenn überhaupt); und
(d) dem Gemisch in bzw. aus Schritt (b) oder (c) ggf. eine Aluminium-Verbindung, insbesondere ein Aluminium-Alkoxid, zuzusetzen (das heißt, Hydrolyse und Kondensation der silikatischen Komponenten erfolgt ggf. vollständig in Gegenwart der Aluminium-Verbindung, die Aluminium-Verbindung kann ggf. aber auch erst nach Bildung/Herstellung der Beschichtungslösung im Sol-Zustand zugesetzt werden).

Die Reihenfolge der Schritte (a), (b) und, sofern sie vorgenommen werden, auch der Schritte (c) und (d) sind beliebig, so dass z.B. das mindestens eine Silan dem Alkali-/Erdalkali-Oxid/- Hydroxid zugesetzt werden kann, ehe dann diesem Gemisch das mindestens eine Polysiloxan, ggf. auch nach Abschluss der Hydrolyse und Kondensation und der Ausbildung des Sols, zugesetzt wird. Genauso ist aber auch denkbar, das Alkali-/Erdalkali-Oxid/-Hydroxid dem mindestens einen Silan zuzusetzen, die Hydrolyse und Kondensation ablaufen zu lassen und erst dann dem Gemisch nach Abschluss der Hydrolyse und Kondensation das mindestens eine Polysiloxan zuzusetzen.

Gemäß einer weiteren bevorzugten Ausführungsform handelt es sich bei dem mindestens einen Silan um ein Gemisch aus Methyltriethoxysilan und Tetraethoxysilan, insbesondere im Verhältnis 3-4:1, speziell 3,4:1 (bezogen auf die Masse).

Gemäß der vorliegenden Erfindung weist die Beschichtungslösung geringe Mengen (bis zu 3 %, bezogen auf die Masse) wenigstens eines Alkali-/Erdalkali-Oxids oder -Hydroxids auf. Dementsprechend finden die Hydrolyse und Kondensation (nach Zugabe von Wasser) in Schritt a) im Alkalischen statt, wobei die (ggf. aus den Oxiden gebildeten) OH-Ionen einerseits die Rolle eines Katalysators übernehmen, der insbesondere eine basische Komponente, insbesondere ein Alkali-Hydroxid, speziell Kaliumhydroxid (KOH) ist. Die Beschichtungslösung enthält daher vorzugsweise geringe Mengen (bis zu 3 Gew.-%) dieses Katalysators, der seinerseits nicht nur eine katalytische Funktion hat, sondem zudem auch in die Matrix der fertigen Beschichtung eingebaut wird.

Gemäß einer weiteren bevorzugten Ausführungsform liegen die einzelnen Komponenten, bezogen auf das Silangemisch, in folgenden Mengen in dem Beschichtungslack bzw. der Beschichtungslösung vor: Polysiloxan 15 bis 25 Gew.-%, vorzugsweise 20 Gew.-%, Alkali-/ Erdalkali-Oxid/-Hydroxid (gleichzeitig Katalysator für die Hydrolyse und Kondensation der Silane) 1 bis 5 Gew.-%, insbesondere-2,8 Gew.-%, Aluminium-Verbindung 0 bis 35 Gew.-%, vorzugsweise 15 Gew.-%, Farbkörper 0 bis 20 Gew.-%, vorzugsweise 10 Gew.-%,

Aus den vorstehend auf das Verfahren zur Herstellung der Beschichtungslösung bezogenen Angaben der einzelnen Komponenten ergeben sich konsequenterweise bevorzugte Ausführungsformen auch der Beschichtungslösung selbst.

Ein weiterer Aspekt der vorliegenden Erfindung besteht darin, mehrere, gleiche oder aber vorzugsweise unterschiedliche Beschichtungslösungen nacheinander auf ein Substrat aufzubringen. Damit lassen sich so genannte Primer- und Deckschichten herstellen. Beispielsweise kann durch eine erfindungsgemäß hergestellte Primerschicht, die vor einer pigmentierten Beschichtungslösung aufgebracht wird, die Haftung zum Grundmaterial verbessert werden. Ebenso ist es möglich, erfindungsgemäß hergestellte, pigmentierte Schichten durch eine erfindungsgemäße Deckschicht vor chemischem Angriff zu schützen. Die Schichten können mit oder ohne Zwischentrocknen entweder zusammen oder nacheinander eingebrannt werden. Andererseits kann die untere Schicht, insbesondere, wenn sie auf Al-haltige Oberflächen aufgetragen wird, auch frei von Al-Verbindungen sein, wohingegen die obere Schicht eine Al-Verbindung aufweist, um den oben genannten Effekt in Folge der Zugabe von Al-Verbindungen zu erzielen.

Dementsprechend ist ein weiterer Aspekt der vorliegenden Erfindung eine Bi- oder Multilayer-Beschichtung, die erhältlich ist durch Auftrag von wenigstens zwei unterschiedlichen Beschichtungslösungen, wie sie weiter oben beschrieben und in den Ansprüchen 1 bis 14 charakterisiert worden sind.

Ein weiterer Aspekt der vorliegenden Erfindung ist ein Bauteil eines Gargerätes, wobei das Bauteil die Beschichtung nach Anspruch 16 oder die Bi-/Multilayer-Beschichtung nach Anspruch 17 aufweist.

### Eigenschaften/Verarbeitung der Beschichtungslösung

Überraschenderweise wurde festgestellt, daß die Matrix (auf Basis des Si-Polymers) der fertigen Beschichtung gemäß vorliegender Erfindung bereits bei/nach Einbrand-Temperaturen von weniger als 300 °C soweit hergestellt ("ausgebrannt") ist, dass beim Anwender im Betrieb bei Temperaturen bis wenigstens 420 °C keine schädlichen Zersetzungsprodukte mehr entstehen.

Nach einer bevorzugten Ausführungsform der erfindungsgemäßen Beschichtungslösung wird diese nach ihrer Applikation auf das Substrat zunächst einem Trocknungsschritt bei 100 bis 180 °C, vorzugsweise bei etwa 120 °C, unterworfen. Dieses Vortrocknen bewirkt, dass die Lösungsmittel aus der Beschichtung entfernt werden. Dadurch wird die Verwendung steiler Aufheizrampen bei der Verdichtung und somit eine rasche Prozessführung mit entsprechenden Taktzeiten ermöglicht, wie sie in einer Produktion unabdingbar sind.

### Beispiele

### Beispiel 1: Herstellung eines SiO₂-Beschichtungssols (Vergleichsbeispiel)

Zu Methyltriethoxysilan und Tetraethoxysilan im Verhältnis (bezogen auf die Masse) von 3,4: 1 (zusammen 88 Gew.-%) werden unter Rühren 2,8 Gew.-% Kaliumhydroxid gegeben und bei Raumtemperatur über einen Zeitraum von 13 h gelöst. Es entsteht eine bräunlich klare Flüssigkeit. Zur Hydrolyse und Kondensation werden anschließend 3,2 Gew.-% Wasser unter Rühren zugetropft, wobei sich die Lösung erwärmt. Nach vollständiger Zugabe der Wassermenge wird die Lösung auf Raumtemperatur abgekühlt. Bezogen auf dieses Gemisch (bestehend aus den Silanen, Kaliumhydroxid und Wasser) werden 19,7 Gew.-% Diethoxy-Polydimethylsiloxan als Polysiloxan zugegeben.

### Beispiel 2: Herstellung eines SiO₂-Beschichtungssols (pigmentiert) (Vergleichsbeispiel)

Zu Methyitriethoxysilan und Tetraethoxysilan im Verhältnis (bezogen auf die Masse) von 3,4:1 (zusammen 88 Gew.-%) werden unter Rühren 2,8 Gew.-% Kaliumhydroxid gegeben und bei Raumtemperatur über einen Zeitraum von 13 h gelöst. Es entsteht eine bräunlich klare Flüssigkeit. Zur Hydrolyse und Kondensation werden anschließend 9,2 Gew.-% Wasser unter Rühren zugetropft, wobei sich die Lösung erwärmt. Nach vollständiger Zugabe der Wassermenge wird die Lösung auf Raumtemperatur abgekühlt. Bezogen auf dieses Gemisch (bestehend aus den Silanen, Kaliumhydroxid und Wasser) werden 19,7 Gew.-% Diethoxy-Polydimethylsiloxan als Polysiloxan zugegeben. Die Pigmentierung erfolgte über den Zusatz von Glimmerpigmenten (10,6 Gew.-%, bezogen auf den Gesamtlack)

### Beispiel 3: Herstellung eines erfindungsgemäßen SiO₂-Beschichtungssols (Aluminium-dotiert)

Zu Methyitriethoxysilan und Tetraethoxysilan im Verhältnis (bezogen auf die Masse) von 3,4:1 (zusammen 78 Gew.-%) werden unter Rühren 10 Gew.-% Aluminium-sek-Butylat und 2,8 Gew.-% Kaliumhydroxid gegeben und bei Raumtemperatur über einen Zeitraum von 13 h gelöst. Es entsteht eine bräunlich klare Flüssigkeit. Zur Hydrolyse und Kondensation werden anschließend 9,2 Gew.-% Wasser unter Rühren zugetropft, wobei sich die Lösung erwärmt. Nach vollständiger Zugabe der Wassermenge wird die Lösung auf Raumtemperatur abgekühlt. Bezogen auf dieses Gemisch (bestehend aus den Silanen, Kaliumhydroxid, Aluminium-sek-Butylat und Wasser) werden 19,7 Gew.-% Diethoxy-Polydimethylsiloxan als Polysiloxan zugegeben.

### Beispiel 4: Verwendung der in Beispiel 1-3 hergestellten SiO₂-Beschichtungssole

Die in Beispiel 1 bis 3 beschriebenen Beschichtungssolen wurden mit 50 Gew.-% 2-Butanol verdünnt und mit einer herkömmlichen Becherpistole auf gereinigte Stahlsubstrate aufgesprüht. Nach einer kurzen (10 Minuten) Trocknung bei 120 °C wurden die Beschichtungen anschließend für 15 Minuten bei 500 °C verdichtet.

## Patentansprüche

1. Beschichtungslösung auf Basis eines Gemisches aus mindestens einem Silan und mindestens einem Polysiloxan, das durch Hydrolyse und Kondensation auf einem Substrat zu einer Beschichtung auf dem Substrat ausgehärtet werden kann, wobei das mindestens eine Silan die allgemeine Formel RₓSi(OR')₄₋ₓ aufweist und das mindestens eine Polysiloxan die allgemeine Formel [R₂SiO]_{y} bzw. R₃Si-(O-SiR₂)_{y}-O-SiR₃ aufweist, in denen
- die Reste R unabhängig voneinander Alkyl, Aryl, Arylalkyl Alkylaryl oder H sind;
- die Reste R' unabhängig voneinander H, Methyl, Ethyl, n- oder i-Propyl, n-, iso-, sek.-oder tert.-Butyl sind;
- x = 0 oder 1 (für das erste Silan);
- x = 0, 1, 2, 3 oder 4 (für jedes weitere Silan); und
- y = eine ganze Zahl, die mindestens 2 ist und nahezu unendlich groß sein kann, **dadurch gekennzeichnet, dass** die Beschichtungslösung zusätzlich wenigstens ein Alkali- oder Erdalkali-Oxid oder -Hydroxid, aufweist, wobei die Beschichtungslösung ein Aluminium-Alkoxid aufweist.

2. Die Beschichtungslösung nach Anspruch 1, wobei x für das erste Silan 1 ist.

3. Die Beschichtungslösung nach Anspruch 1 oder 2, wobei die Beschichtungslösung Farbkörper, insbesondere temperaturbeständige anorganische Pigmente aufweist.

4. Die Beschichtungslösung nach einem der vorhergehenden Ansprüche, wobei die temperaturbeständigen anorganischen Pigmente auf Glimmer basieren und eine metallische Optik gewährleisten.

5. Die Beschichtungslösung nach einem der vorhergehenden Ansprüche, wobei die Beschichtungslösung zusätzlich Lösungsmittel umfasst, deren Siedepunkt höher als der von Ethanol ist.

6. Die Beschichtungslösung nach einem der vorhergehenden Ansprüche, wobei R' Methyl oder Ethyl ist.

7. Die Beschichtungslösung nach einem der vorhergehenden Ansprüche, wobei das mindestens eine Silan Methyltriethoxysilan oder Tetraethoxysilan sind.

8. Die Beschichtungslösung nach einem der vorhergehenden Ansprüche, wobei das Alkali-/ Erdalkali-Oxid/-Hydroxid ein Alkali-Oxid oder -Hydroxid, insbesondere ein Alkali-Hydroxid und speziell NaOH oder KOH ist.

9. Die Beschichtungslösung nach einem der vorhergehenden Ansprüche, wobei das Verhältnis zwischen dem Gemisch aus Silan und Polysiloxan einerseits und Alkali-/Erdalkali-Oxid/- Hydroxid, bezogen auf das Atomverhältnis Si:Alkali-/Erdalkalimetall 20:1 bis 5:1 bis 10:1, speziell 12:1 bis 11:1, beträgt.

10. Die Beschichtungslösung nach einem der vorhergehenden Ansprüche, wobei R und R' unabhängig voneinander Methyl und/oder Ethyl sind und x = 1 ist.

11. Die Beschichtungslösung nach Anspruch 10, wobei R = Methyl, R' = Ethyl, das Alkali-/Erdalkali-Oxid/-Hydroxid KOH ist und x = 1.

12. Die Beschichtungslösung nach Anspruch 10, wobei R = Methyl, R' = Ethyl, das Alkali-/Erdalkali-Oxid/-Hydroxid NaOH ist und x = 1.

13. Die Beschichtungslösung nach einem der vorhergehenden Ansprüche, wobei die Beschichtungslösung nanoskalige SiO₂-Partikel aufweist.

14. Verfahren zur Herstellung der Beschichtungslösung nach einem der vorhergehenden Ansprüche, wobei das Verfahren die Schritte in beliebiger Reihenfolge umfasst,
(a) mindestens ein Silan der allgemeinen Formel RₓSi(OR')₄₋ₓ allein oder mit mindestens einem Polysiloxan der allgemeinen Formel [R₂SiO]_{y} bzw. R₃Si-(O-SiR₂)_{y}-O-SiR₃, wobei R, R', x und y wie in Anspruch 1 definiert sind, bereitzustellen und ggf. zu mischen;
(b) dem Silan bzw. Gemisch in bzw. aus Schritt (a) ein Alkali-/Erdalkali-Oxid/-Hydroxid zuzusetzen;
(c) dem Gemisch in bzw. aus Schritt (b) ggf. einen Farbkörper zuzusetzen; und
(d) dem Gemisch in bzw. aus Schritt (b) oder (c) ggf. eine Aluminium-Verbindung, insbesondere ein Aluminium-Alkoxid, zuzusetzen.

15. Beschichtung auf einem metallischen Substrat, wobei sich die Beschichtung erhalten lässt durch Applikation, Trocknung, Verdichtung und Einbrand der Beschichtungslösung nach einem der Ansprüche 1 bis 13.

16. Bi- oder Multilayer-Beschichtung, erhältlich durch Auftrag von wenigstens zwei unterschiedlichen Beschichtungslösungen nach einem der Ansprüche 1 bis 13, wobei die Schichten mit oder ohne Zwischentrocknen entweder zusammen oder nacheinander eingebrannt werden.

17. Bauteil eines Gargerätes, wobei das Bauteil die Beschichtung nach Anspruch 15 oder 16 aufweist.

## Claims

1. Coating solution based on a mixture of at least one silane and at least one polysiloxane which can be cured by hydrolysis and condensation on a substrate to produce a coating on the substrate, the least one silane having the general formula RₓSi(OR')_{4-X} and the at least one polysiloxane having the general formula [R₂SiO]_{y} or R₃Si-(O-SiR₂)_{y}-O-SiR₃ in which
- the residues R are independently alkyl, aryl, arylalkyl, alkylaryl or H;
- the residues R' are independently H, methyl, ethyl, n- or i-propyl, n-, iso-, sec- or tert-butyl;
- x = 0 or 1 (for the first silane);
- x = 0, 1, 2, 3 or 4 (for each further silane); and
- y = is an integer which is at least 2 and can be virtually infinitely large, **characterized in that** the coating solution additionally contains at least one alkali or alkaline-earth oxide or hydroxide, the coating solution containing an aluminium alkoxide.

2. Coating solution according to claim 1, wherein x is 1 for the first silane.

3. Coating solution according to claim 1 or 2, wherein the coating solution contains colorants, in particular temperature-resistant inorganic pigments.

4. Coating solution according to one of the preceding claims, wherein the temperature-resistant inorganic pigments are mica-based and provide a metallic visual appearance.

5. Coating solution according to one of the preceding claims, wherein the coating solution additionally contains solvents whose boiling point is higher than that of ethanol.

6. Coating solution according to one of the preceding claims, wherein R' is methyl or ethyl.

7. Coating solution according to one of the preceding claims, wherein the at least one silane is methyltriethoxysilane or tetraethoxysilane.

8. Coating solution according to one of the preceding claims, wherein the alkali/alkaline-earth oxide/hydroxide is an alkali oxide or hydroxide, in particular an alkali hydroxide and specifically NaOH or KOH.

9. Coating solution according to one of the preceding claims, wherein the ratio of the silane and polysiloxane mixture to the alkali/alkaline-earth oxide/hydroxide, referred to the atomic ratio Si:alkali/alkaline-earth metal, is 20:1 to 5:1 to 10:1, specifically 12:1 to 11:1.

10. Coating solution according to one of the preceding claims, wherein R and R' are independently methyl and/or ethyl and x = 1.

11. Coating solution according to claim 10, wherein R = methyl, R' = ethyl, the alkali/alkaline-earth oxide/hydroxide is KOH and x = 1.

12. Coating solution according to claim 10, wherein R = methyl, R' = ethyl, the alkali/alkaline-earth oxide/hydroxide is NaOH and x = 1.

13. Coating solution according to one of the preceding claims, wherein the coating solution contains nanoscale SiO₂ particles.

14. Method for producing the coating solution according to one of the preceding claims, wherein the method comprises the following steps in any sequence,
(a) prepare at least one silane of the general formula R_{X}Si(OR')_{4-X} alone or with at least one polysiloxane of the general formula [R₂SiO]_{y} or R₃Si-(O-SiR₂)_{y}-O-SiR₃, where R, R', x and y are defined as in claim 1, and mix if necessary;
(b) add an alkali/alkaline-earth oxide/hydroxide to the silane or mixture in/from step (a);
(c) if required, add a colorant to the mixture in/from step (b); and
(d) if required, add an aluminium compound, in particular an aluminium alkoxide, to the mixture in/from step (b) or (c).

15. Coating on a metal substrate, the coating being obtainable by application, drying, densification and firing-on of the coating solution according to one of claims 1 to 13.

16. Bi- or multilayer coating, obtainable by applying at least two different coating solutions according to one of claims 1 to 13, the coats being fired on with or without intermediate drying either together or consecutively.

17. Component of a cooking appliance, wherein the component has the coating according to claim 15 or 16.

## Revendications

1. Solution d'enduction à base d'un mélange d'au moins un silane et d'au moins un polysiloxane, qui peut être durci par hydrolyse et par condensation sur un substrat pour obtenir une enduction sur le substrat, ledit au moins un silane présentant la formule générale RₓSi(OR')₄₋ₓ et ledit au moins un polysiloxane présentant la formule générale [R₂SiO]_{y}, respectivement R₃Si-(O-SiR₂)_{y}-O-SiR₃, dans lesquelles
- les résidus R représentent, indépendamment l'un de l'autre, un groupe alkyle, un groupe aryle, un groupe arylalkyle, un groupe alkylaryle ou un atome d'hydrogène ;
- les résidus R' représentent, indépendamment l'un de l'autre, un atome d'hydrogène, un groupe méthyle, un groupe éthyle, un groupe n-propyle ou un groupe isopropyle, un groupe n-butyle, un groupe isobutyle, un groupe secbutyle ou un groupe tert-butyle ;
- x est égal à 0 ou 1 (pour le premier silane) ;
- x est égal à 0, 1, 2, 3 ou 4 (pour chaque silane supplémentaire) ; et
- y représente un nombre entier qui est égal à au moins 2 et qui peut représenter un nombre pratiquement infini, **caractérisée en ce que** la solution d'enduction présente en outre au moins un oxyde ou un hydroxyde de métal alcalin ou de métal alcalino-terreux, la solution d'enduction présentant un alcoxyde d'aluminium.

2. Solution d'enduction selon la revendication 1, dans laquelle x, pour le premier silane, est égal à 1.

3. Solution d'enduction selon la revendication 1 ou 2, dans laquelle la solution d'enduction présente des corps colorés, en particulier des pigments inorganiques résistant à la température.

4. Solution d'enduction selon l'une quelconque des revendications précédentes, dans laquelle les pigments inorganiques résistant à la température sont à base de mica et garantissent un aspect métallique.

5. Solution d'enduction selon l'une quelconque des revendications précédentes, dans laquelle la solution d'enduction comprend en outre des solvants dont le point d'ébullition est supérieur à celui de l'éthanol.

6. Solution d'enduction selon l'une quelconque des revendications précédentes, dans laquelle R' représente un groupe méthyle ou un groupe éthyle.

7. Solution d'enduction selon l'une quelconque des revendications précédentes, dans laquelle ledit au moins un silane représente le méthyltriéthoxysilane ou le tétraéthoxysilane.

8. Solution d'enduction selon l'une quelconque des revendications précédentes, dans laquelle l'oxyde/hydroxyde de métal alcalin/alcalino-terreux représente un oxyde ou un hydroxyde de métal alcalin, en particulier un hydroxyde de métal alcalin et de manière spécifique du NaOH ou du KOH.

9. Solution d'enduction selon l'une quelconque des revendications précédentes, dans laquelle le rapport entre le mélange de silane et de polysiloxane d'une part et l'oxyde/hydroxyde de métal alcalin/alcalino-terreux, rapporté au rapport atomique Si:métal alcalin/alcalino-terreux, s'élève de 20:1 à 5:1 à 10:1, spécifiquement de 12:1 à 11:1.

10. Solution d'enduction selon l'une quelconque des revendications précédentes, dans laquelle R et R' représentent, indépendamment l'un de l'autre, un groupe méthyle et/ou un groupe éthyle et x est égal à 1.

11. Solution d'enduction selon la revendication 10, dans laquelle R représente un groupe méthyle, R' représente un groupe éthyle, l'oxyde/hydroxyde de métal alcalin/alcalino-terreux représente du KOH et x est égal à 1.

12. Solution d'enduction selon la revendication 10, dans laquelle R représente un groupe méthyle, R' représente un groupe éthyle, l'oxyde/hydroxyde de métal alcalin/alcalinoterreux représente du NaOH et x est égal à 1.

13. Solution d'enduction selon l'une quelconque des revendications précédentes, dans laquelle la solution d'enduction présente des particules de SiO₂ à l'échelle du nanomètre.

14. Procédé pour la préparation d'une solution d'enduction selon l'une quelconque des revendications précédentes, dans lequel le procédé comprend les étapes dans lesquelles, dans n'importe quel ordre :
(a) on procure au moins un silane répondant à la formule générale RₓSi(OR')₄₋ₓ à titre individuel ou avec au moins un polysiloxane répondant à la formule générale [R₂SiO]_{y}, respectivement R₃Si-(O-SiR₂)y-O-SiR₃, dans lesquelles R, R', x et y sont tels que définis à la revendication 1, et le cas échéant, on les mélange ;
(b) on ajoute au silane, respectivement au mélange dans, respectivement à partir de l'étape (a), un oxyde/hydroxyde de métal alcalin/alcalino-terreux ;
(c) on ajoute au mélange dans, respectivement à partir de l'étape (b), le cas échéant un corps coloré ;
(d) on ajoute au mélange dans, respectivement à partir de l'étape (b) ou (c), le cas échéant un composé d'aluminium, en particulier un alcoxyde d'aluminium.

15. Enduction sur un substrat métallique, l'enduction pouvant être obtenue par application, par séchage, par condensation et par cuisson ou durcissement de la solution d'enduction selon l'une quelconque des revendications 1 à 13.

16. Enduction bicouche ou multicouche, que l'on obtient par application d'au moins deux solutions d'enduction différentes selon l'une quelconque des revendications 1 à 13, les couches étant soumises à une cuisson ou à un durcissement, avec ou sans séchage intermédiaire, soit de manière conjointe, soit de manière successive.

17. Composant d'un appareil de cuisson, le composant présentant l'enduction selon la revendication 15 ou 16.
